# DEMANDE DE BREVET EUROPEEN

(11) **EP 3 482 634 A1**
(43) Date de publication de la demande: **15.05.2019**
(21) Numéro de dépôt: 18205843.8
(22) Date de dépôt: 13.11.2018
(51) Int. Cl.: A21B 1/44, A21B 5/03, A21B 1/50

(54) **MACHINE DE PREPARATION DE CREPES OU SIMILAIRE**

(30) Priorité: 14.11.2017 FR 1760701
(71) Demandeur: SAS Holding Bernard Blachere, 13160 Chateaurenard (FR)
(72) Inventeur: BLACHERE, Bernard, 13210 SAINT REMY DE PROVENCE (FR); VIDAL, Pierre, 13550 NOVES (FR)
(74) Mandataire: Rhein, Alain

(57) **Abrégé**

L'invention concerne une machine de préparation de crêpe ou similaire comportant un bâti 2 sur lequel est monté pivotant un support rotatif 9 équipé d'une pluralité de dispositifs de cuisson 4 et comprenant encore des moyens d'entrainement 7 en rotation dudit support 9 pour amener successivement et cycliquement lesdits dispositifs de cuisson 4 au moins au-devant d'un système de distribution 6 de pâte à crêpe ou similaire et une unité de gestion 10 du fonctionnement desdits moyens d'entrainement 7 et dudit système de distribution 6.

Sur le support rotatif 9 sont montés des moyens d'identifications de position angulaire R1, R2, R3, R4, R5, R6 de chaque dispositif de cuisson 4 et sur le bâti 2 sont montés des moyens de lecture aptes à transmettre à l'unité de gestion 10 une information relative au positionnement d'un dispositif de cuisson 4 au passage des moyens d'identification R1 ; R2 ; R3 ; R4 ; R5 ; R6 de ce dernier au-devant desdits moyens de lecture, la machine 1 comportant encore, en liaison avec l'unité de gestion 10, des moyens de sélection 11 pour sélectionner entre au moins un dispositif de cuisson 4 et au moins plusieurs dispositifs de cuisson 4, pour commander l'arrêt en rotation immédiat ou temporisé dudit support rotatif 9 au passage des moyens d'identification R1 et/ou R2 et/ou R3 et/ou R4 et/ou R5 et/ou R6 du ou des dispositifs 4 sélectionnés devant lesdits moyens de lecture.

## Description

La présente invention concerne une machine de préparation de crêpes ou similaire.

Dans le domaine des machines de préparation de crêpes, il a été proposé des machines de préparation comprenant des dispositifs de cuisson agencés comme un carrousel et pivotants autour d'une zone de distribution de pâte à crêpe. En utilisation, les dispositifs ou plaques de cuisson sont allumés et pivotés successivement vers la zone de distribution pour une cuisson à la chaine afin de fournir des crêpes cuites.

On connait plus particulièrement une telle machine par le document DE 7906415U1. Ainsi ce document décrit un dispositif de cuisson pour crêpes comportant une partie inférieure montée sur moyens de roulement et surmontée d'une plaque circulaire comportant en bordure périphérique et avec un décalage angulaire identique, une pluralité de plaques chauffantes inférieures. La plaque circulaire est entraînée en rotation par des moyens moteurs adaptés. Au droit des plaques chauffantes inférieures, toujours en périphérie de la plaque circulaire, sont montées, pivotantes, des poêles qui peuvent donc, à la fois, venir reposer sur les plaques chauffantes inférieures ou basculer dans une position favorisant l'évacuation des crêpes.

De plus, en bordure périphérique intérieure de la plaque rotative, de forme annulaire, sont montées, également de manière pivotante, les plaques chauffantes supérieures, lesquelles sont donc susceptibles d'être rabattues au-dessus des poêles destinées à contenir la pâte à crêpe à cuire, voire même s'engager de manière limitée dans ces poêles.

L'objectif visé étant d'assurer une cuisson de cette pâte à crêpe à la fois par le dessous et le dessus.

Des cames en forme de rails assurent au cours d'un cycle de cuisson, d'une part, le rabattement des plaques de cuisson supérieures dans les poêles de cuisson des crêpes, le relèvement de ces plaques de cuisson supérieures en fin de cycle de cuisson puis, successivement, le basculement des poêles de cuisson pour l'évacuation des crêpes cuites.

Le dispositif de cuisson tel que décrit dans ce document D1 prévoit également une station de graissage (huilage) de la poêle ainsi qu'une station d'alimentation en pâte.

Malheureusement, ce type de machine de préparation de crêpes de l'art antérieur ne sont pas suffisamment satisfaisantes car, elles ne permettent pas d'adapter la cadence de production à la demande.

Un premier objectif de la présente invention est de proposer un système amélioré permettant d'adapter la production de crêpes cuites à une demande variable.

Pour ce faire, l'invention concerne une machine de préparation de crêpe ou similaire comportant un bâti sur lequel est monté pivotant autour d'un axe vertical un support rotatif équipé sur son pourtour d'une pluralité de dispositifs de cuisson, la machine comprenant encore :
- des moyens d'entrainement en rotation dudit support pour amener successivement et cycliquement lesdits dispositifs de cuisson au moins sous un système de distribution de pâte à crêpe ou similaire ;
- et une unité de gestion du fonctionnement desdits moyens d'entrainement et dudit système de distribution.

Plus particulièrement cette machine se caractérise en ce que sur le support rotatif sont montés des moyens d'identification de position angulaire de chaque dispositif de cuisson sur ce support rotatif et que sur le bâti fixe sont montés des moyens de lecture aptes à transmettre à l'unité de gestion une information relative au positionnement d'un dispositif de cuisson au passage des moyens d'identification de ce dernier au-devant desdits moyens de lecture, la machine comportant encore, en liaison avec l'unité de gestion, des moyens de sélection pour sélectionner entre au moins un dispositif de cuisson et au moins plusieurs dispositifs de cuisson pour commander l'arrêt en rotation immédiat ou temporisé dudit support rotatif au passage des moyens d'identification du ou des dispositifs sélectionnés devant lesdits moyens de lecture.

Avantageusement, au travers de l'unité de gestion il est possible à un utilisateur de réduire la cadence de cuisson de la machine en cas de baisse de la demande et de réaugmenter ladite cadence quand nécessaire, sans avoir besoin d'éteindre la machine.

Selon d'autres aspects pris isolément ou combinés selon toutes les combinaisons techniquement réalisables :
- les moyens de sélection sont configurés pour sélectionner ladite partie de dispositifs de cuisson sur un intervalle régulier ou
- ladite partie de dispositifs de cuisson sélectionnable correspond d'une part à un dispositif de cuisson d'autre part à plus d'un dispositif de cuisson, en particulier environ la moitié du total des dispositifs de cuisson ; et/ou
- la machine comporte six dispositifs de cuisson équipés, chacun d'une plaque de cuisson; et/ou
- les moyens de sélection sont configurés pour sélectionner une position de réglage sur trois, correspondant à une plaque, trois plaques, et six plaques ; et/ou
- le support rotatif comporte un plateau circulaire comportant des logements pour la réception des dispositifs de cuisson, et/ou ;
- une barre périphérique s'étend autour du plateau circulaire ; et/ou
- le système de distribution est mobile entre une position d'activation dans laquelle il est au niveau d'un point de distribution, et une position d'inactivation dans laquelle il est à distance du point de distribution, et lesdites positions activent ou inactivent le système d'entrainement et de préférence une commande de distribution automatique de produit.

Selon une variante, la machine comprend un système de distribution et d'étalage de pâte à cuire comprenant
- un réservoir de pâte ayant une sortie,
- une pompe d'injection connectée à la sortie du réservoir,
- un étaleur connecté à la pompe d'injection et configuré pour étaler une pâte sur une surface de cuisson, et
- un circuit d'injection reliant le réservoir à l'étaleur.

L'invention sera davantage détaillée par la description de modes de réalisation non limitatifs, et sur la base des figures annexées, dans lesquelles :
- la figure 1 est une vue dans l'espace de la machine de fabrication de crêpes selon une variante préférée de l'invention ;
- la figure 2A est une vue dans l'espace d'un dispositif de cuisson de la machine de la figure 1 ;
- la figure 2B est une vue dans l'espace d'une face avant d'un panneau de commande de la machine de la figure 1 ;
- la figure 2C est une vue dans l'espace d'une face supérieure avant du panneau de commande de la figure 2B ;

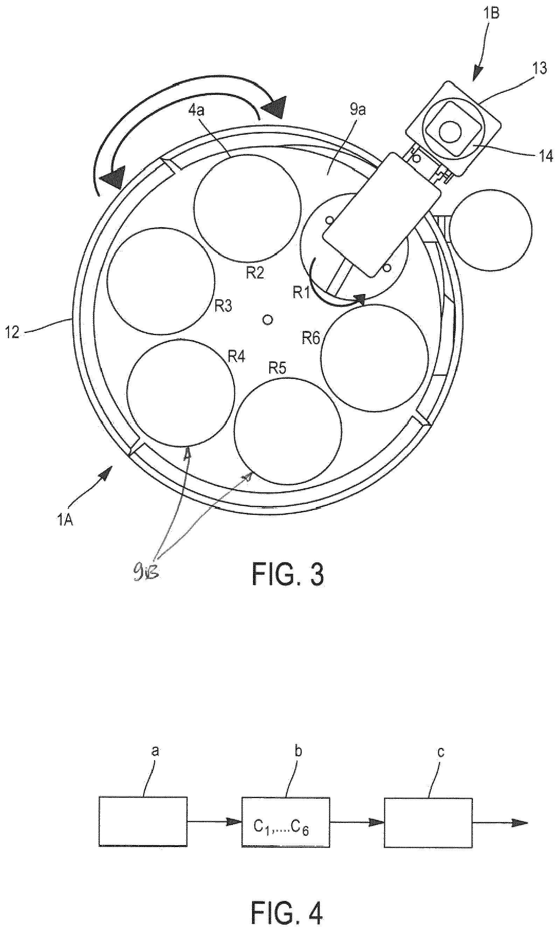

- la figure 3 est une vue de dessus de la machine de la figure 1 ;
- la figure 4 est un schéma d'une méthode de préparation de crêpes au moyen de la machine de la figure 1 ;

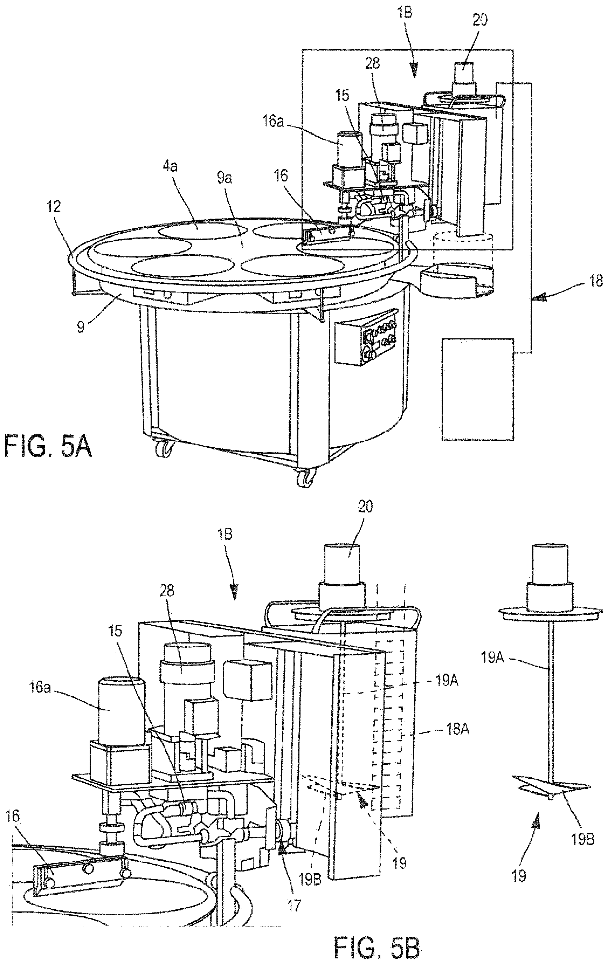

- la figure 5A est une vue dans l'espace similaire à celle de la figure 1, illustrant un système d'injection et d'étalage de pâte à crêpes ;
- la figure 5B est une vue rapprochée du système d'injection et d'étalage de la figure 5A ;
- la figure 6A est une vue dans l'espace d'une pompe d'injection du système des figures 5A et 5B, assemblée ;
- la figure 6B est une vue éclatée de la pompe d'injection de la figure 6A ;

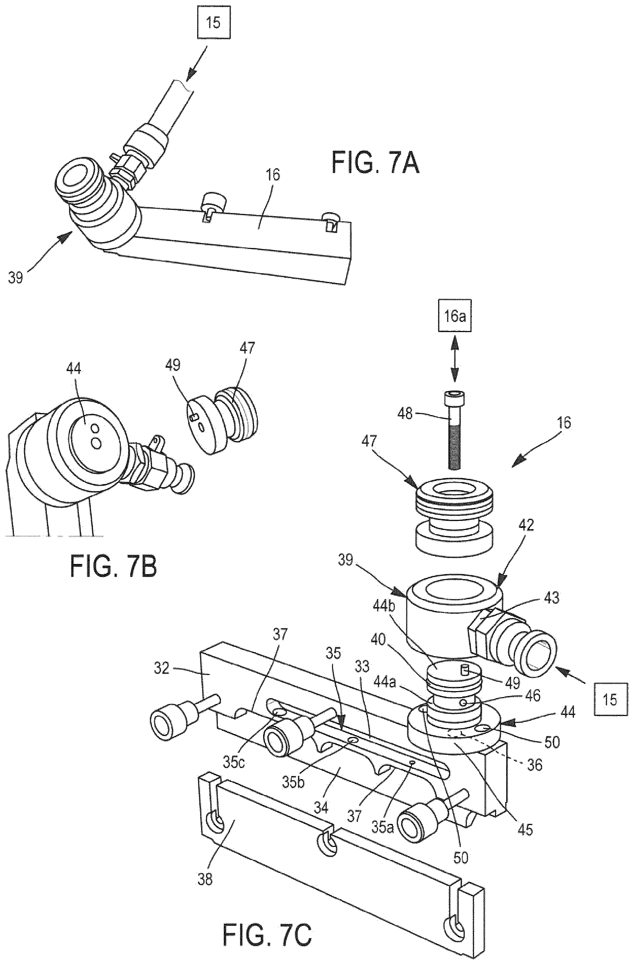

- la figure 7A est une vue dans l'espace d'un étaleur du système des figures 5A et 5B ;
- la figure 7B est une vue dans l'espace d'un mécanisme de connexion de l'étaleur de la figure 7A partiellement démonté ;
- la figure 7C est une vue éclatée dans l'espace de l' étaleur et du mécanisme de connexion des figures 7A et 7B ;

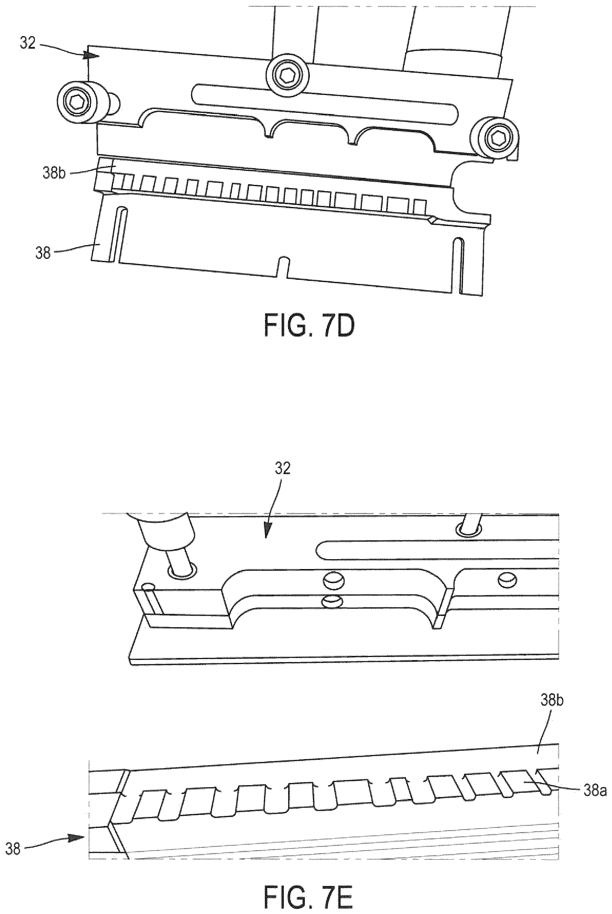

- la figure 7D est une vue éclatée d'un étaleur selon une deuxième variante;
- la figure 7E est une vue dans l'espace d'une plaque de l'étaleur de la figure 7D ; et
- la figure 8 est un schéma d'un circuit d'injection du système des figures 5A et 5B.

L'invention concerne généralement une machine de préparation de crêpes ou similaire 1.

Cette machine 1 comprend un bâti 2. Celui-ci peut reposer au sol, soit directement soit au travers de moyens de roulement 3 qui en facilite le déplacement. Ce bâti 2 peut avoir moins d'un mètre de hauteur, et la machine a de préférence environ 1,5 m de hauteur et environ 1,5 m de largeur.

Selon l'invention, sur le bâti 2 est monté en rotation autour d'un axe vertical un support rotatif 9, comportant avantageusement un plateau circulaire 9A. Sur le pourtour de ce support rotatif 9 sont montés une pluralité de dispositifs de cuisson 4. De manière habituelle, ceux-ci comportent, chacun, une plaque de cuisson 4A.

Ainsi, selon un mode de réalisation préféré, au niveau du plateau circulaire 9A que comporte le support rotatif 9, peuvent être ménagés, avantageusement à décalage angulaire régulier, des logements 9B pour la réception des dispositifs de cuisson 4, logements 9B ouverts en partie supérieure et dont vont émerger lesdites plaques de cuisson 4A de chacun de ces dispositifs de cuisson 4. L'ensemble s'apparente à un carrousel.

De préférence, la machine 1 comporte six dispositifs de cuisson 4, donc six plaques de cuisson 4A susceptibles d'être activées correspondant à un bon compromis entre fourniture de crêpes dans des périodes d'affluences de passants, tout en ne faisant appel qu'à un seul opérateur manipulant la machine 1 sans trop de difficultés.

La machine 1 comporte des moyens d'entrainement 7 pour déplacer en rotation le support rotatif 9 et amener successivement et cycliquement chaque dispositif de cuisson 4 au-devant d'un point de distribution de pâte 5. Au point de distribution 5 est prévu un système de distribution de produit à cuire 6, en particulier de pâte à crêpes. Plus particulièrement, le système de distribution 6 est une partie d'un système d'injection de pâte 1B qui sera détaillé dans une partie séparée.

Les moyens d'entrainement 7, comportant par exemple un moteur électrique d'entrainement 8, peuvent être implantés sur le bâti 2 sous le support rotatif 9. Le rotor de ce moteur 8 est connecté à ce dernier par des moyens d'entrainement adaptés, à courroie et/ou roues dentées ou autre. Un moyen de connexion électrique préféré des dispositifs de cuisson 4 compatible avec leur rotation tel qu'un système de collecteur tournant, est connu de l'homme du métier et ne sera pas davantage discuté.

La machine 1 comprend en outre une unité de gestion 10 connectée, notamment, aux moyens d'entrainement 7. Cette unité de gestion 10 peut avantageusement être connectée au système de distribution de pâte 6, en particulier au système d'injection de pâte 1B décrit plus bas.

L'unité de gestion 10 est configurée pour automatiser la rotation du support rotatif 9 et la distribution de produit, en particulier de pâte à crêpes. Plus particulièrement, lorsqu'un dispositif de cuisson 4 sur lequel doit être cuit le produit est disposé en dessous du système de distribution 6, l'unité de gestion 10 peut commander la distribution du produit vers ledit dispositif de cuisson 4. Toutefois cette distribution de produit peut également être gérée par un automatisme adapté déclenchant le déversement de la pâte depuis le système de distribution 6 à l'arrêt d'un dispositif de cuisson 4 sous ce dernier.

Selon l'invention, sur le support rotatif 9 sont montés des moyens d'identification R1, R2, R3, R4, R5, R6 de position angulaire de chaque dispositif de cuisson 4 sur ce support rotatif. De plus sur le bâti 2 sont montés des moyens de lecture aptes à transmettre à l'unité de gestion 10 une information relative au positionnement d'un dispositif de cuisson 4 au passage des moyens d'identification de ce dernier au-devant desdits moyens de lecture.

Par ailleurs, la machine 1 comporte encore, en liaison avec l'unité de gestion 10, des moyens de sélection 11 pour sélectionner au moins un dispositif de cuisson 4 et au moins plusieurs dispositifs de cuisson 4, au travers de leur identification R1, R2, R3, R4, R5, R6, pour commander l'arrêt en rotation immédiat ou temporisé dudit support rotatif 9 au passage de ces moyens d'identification R1, R2, R3, R4, R5, R6 du ou des dispositifs 4 sélectionnés devant lesdits moyens de lecture.

A titre d'exemple, sous le support rotatif 9, voire sous son plateau 9A et au droit de chaque dispositif de cuisson 4 peuvent être installés ces moyens d'identification R1, R2, R3, R4, R5, R6. Ceux-ci peuvent emprunter différentes formes de réalisation selon les moyens de lecture retenus et fixés au bâti 2. Ainsi, si ces derniers sont de type optique, lesdits moyens d'identification peuvent emprunter la forme d'une pastille réfléchissante, tout comme ils peuvent prendre la forme de simples taquets placés sous ledit plateau 9A pour la commande d'un interrupteur instable constituant par exemple des moyens de lecture de type mécanique. On peut également envisager ces derniers de type électromagnétique apte à reconnaître le passage de moyens d'identification R1, R2, R3, R4, R5, R6 sous forme, par exemple, d'un téton métallique placé sous le plateau 9A en correspondance des dispositifs de cuisson 4 et au droit desdits moyens de lecture.

En somme, les moyens d'identification R1, R2, R3, R4, R5, R6 sont définis par des éléments à réponse magnétique et/ou optique et/ou mécanique associés au support rotatif 9 au droit des dispositif de cuisson 4. Préférentiellement, ces éléments de réponse sont solidarisés sous ledit plateau 9A.

En ce qui concerne les moyens de sélection 11, ils peuvent se présenter sous forme d'un sélecteur associé au travers des moyens d'identification R1, R2, R3, R4, R5, R6 à chaque dispositif de cuisson 4 et/ou à des groupes R1 ; R1, R3, R6 ; R1, R2, R3, R4, R5, R6, de dispositif de cuisson 4, chaque groupe comportant au moins un dispositif de cuisson 4.

Avantageusement, en sélectionnant une partie des dispositifs de cuisson 4, l'unité de gestion 10 permet à un utilisateur de réduire la cadence de cuisson de la machine 1 en cas de baisse de la demande et de réaugmenter ladite cadence quand nécessaire, en resélectionnant plus, voire la totalité des dispositifs de cuisson 4, sans avoir besoin d'éteindre, puis rallumer la machine 1.

De façon étonnante, la demanderesse s'est aperçue qu'en utilisation constante sans éteindre la machine 1, mais en réduisant et en réaugmentant la cadence, une odeur de crêpes cuite se répand pendant toute l'utilisation autour de la machine 1 et stimule l'appétence des passants, ce qui fait réaugmenter la demande de crêpes.

En particulier, ladite partie de dispositifs de cuisson 4 sélectionnable correspond, d'une part, à un dispositif de cuisson 4, d'autre part, à plus d'un dispositif de cuisson 4, par exemple environ la moitié du total des dispositifs de cuisson 4. En d'autres termes au travers desdits moyens de sélection 11 et de l'unité de gestion 10 il est possible de sélectionner le nombre de dispositifs de cuisson 4 utilisés. Par exemple, les moyens de sélection 11 peuvent être configurés pour sélectionner une position de réglage sur plusieurs, en particulier sur trois, correspondant, au mode de réalisation illustré, à une plaque, soit à trois plaques, soit à six plaques de cuisson.

Selon une variante, les moyens de sélection 11 sont configurés pour sélectionner ladite partie de dispositifs de cuisson 4 sur un intervalle régulier ou quasi régulier. Par « sélection sur intervalle régulier » est entendu une sélection d'une fraction des dispositifs de cuisson 4, en alternant de manière régulière le nombre de dispositifs 4 sélectionnés et le nombre de dispositifs 4 non-sélectionnés à la suite. Dans une variante moins préférée, on peut envisager un intervalle non-régulier quand il n'est pas possible d'avoir une alternance stricte de dispositifs de cuisson 4 sélectionnés et non sélectionnés, par exemple si le nombre total de dispositifs de cuisson 4 est impair.

Selon un mode de réalisation préféré, lesdits moyens de sélection 11 se présentent sous forme d'un sélecteur à au moins deux positions C1, C3, C6, chaque position correspondant à la sélection d'un nombre distinct et supérieur ou égale à 1 de dispositifs de cuisson 4, ceci au travers de l'identification R1, R2, R3, R4, R5, R6 de chacun de ces dispositifs de cuisson 4.

Ainsi, à chaque position C1, C3, C6 correspond l'identification R1 et/ou R2 et/ou R3 et/ou R4 et/ou R5 et/ou R6 d'un ou plusieurs dispositifs de cuisson 4 sélectionnés. L'information correspondant à cette position C1, C3, C6 et donc de l'identification du ou des dispositifs de cuisson sélectionnés est transmise à l'unité de gestion 10. Celle-ci est définie apte à reconnaitre, au travers des moyens de lecture, ces identifications R1 et/ou R2 et/ou R3 et/ou R4 et/ou R5 et/ou R6 du ou des dispositifs de cuisson 4 sélectionnés, pour commander l'arrêt en rotation du support rotatif 9 au passage devant lesdits moyens de lecture des moyens d'identification R1 ou R2 ou R3 ou R4 ou R5 ou R6 correspondant à l'un des dispositif de cuisson 4 de la sélection.

Selon un autre mode de réalisation, lesdits moyens de lecture, comportent plusieurs unités de lecture, chacune correspondant à une sélection de dispositif de cuisson possible. Tandis qu'à chacune des positions du sélecteur C1, C3, C6 des moyens de sélections 11, correspond l'activation d'une unité de lecture déterminée apte à reconnaitre l'identification R1 et/ou R2 et/ou R3 et/ou R4 et/ou R5 et/ou R6 du ou des dispositifs de cuisson 4 correspondant à une sélection déterminée.

Ainsi, substantiellement, lesdits moyens de lecture peuvent se présenter sous forme de plusieurs capteurs magnétique et/ou optiques et/ou mécaniques placés sur le bâti 2, avantageusement sous le support rotatif 9, ceci à différentes distances de l'axe de rotation de ce dernier. Les moyens d'identifications R1, R2, R3, R4, R5, R6 peuvent alors se présenter sous forme, selon le cas, d'un élément à réponse magnétique et/ou optique et/ou mécanique placé sous le support rotatif 9, au droit d'un dispositif de cuisson 4, ceci à une distance de l'axe de rotation du support 9 correspondant à au moins un desdits capteurs.

Substantiellement, les éléments de réponse peuvent prendre la forme d'un téton métallique, d'une pastille optique ou d'un taquet.

Dans ces conditions, au passage d'un téton, d'une pastille ou d'un taquet correspondant à un dispositif de cuisson 4 au-devant du capteur rendu actif par le sélecteur commande, ledit capteur génère, au travers de l'unité de gestion 10, l'arrêt en rotation du support rotatif 9. A noter que cet arrêt peut être immédiat ou différé. Il est déterminé afin que ledit dispositif de cuisson 4 identifié s'arrête au point de distribution 5, au-devant du système de distribution de pâte 6.

Avantageusement, la machine 1 comporte encore des moyens de détection de fin de cycle de distribution de pâte reliés à l'unité de gestion 10 pour relancer la rotation du support rotatif 6, jusqu'à l'identification d'un autre dispositif de cuisson 4 correspondant à la sélection par l'intermédiaire desdits moyens de sélection 11.

Selon l'invention encore, l'unité de gestion 10 comporte des moyens de commande d'ajustement de la vitesse de rotation, et donc du temps de cuisson, notamment en fonction du nombre de dispositifs de cuisson 4 sélectionné et/ou du temps de cycle de distribution de pâte au-devant du système de distribution 6.

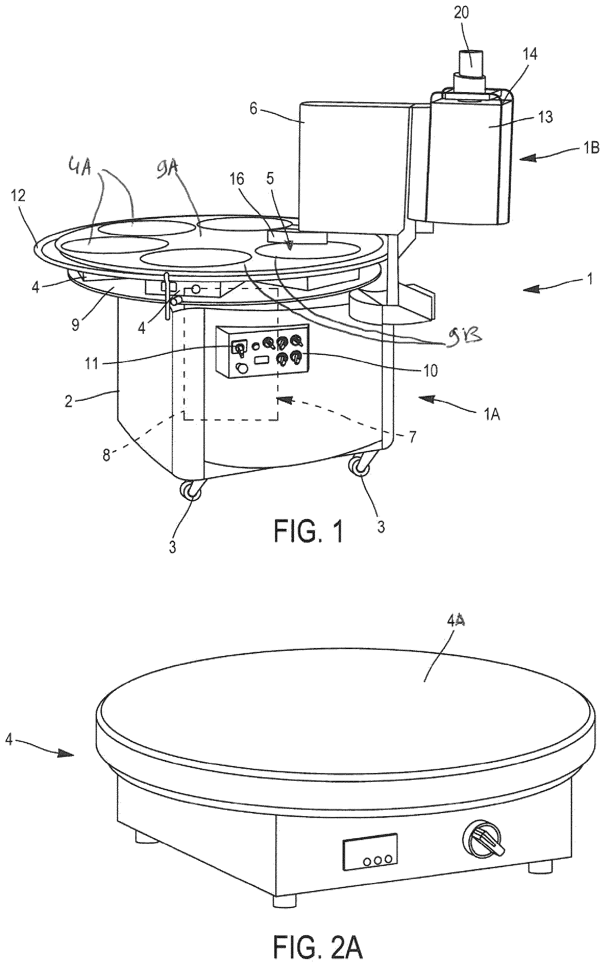

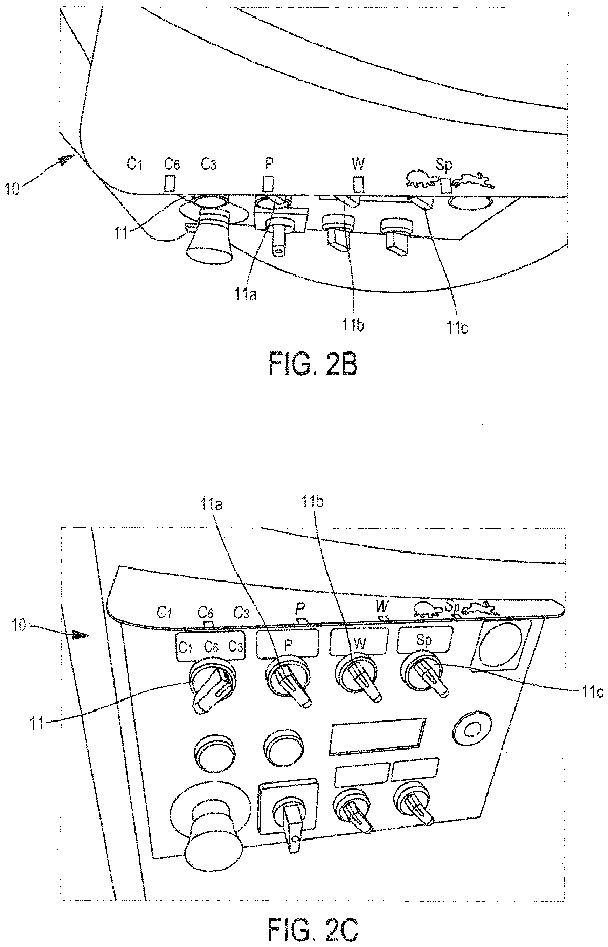

Dans le mode de réalisation illustré dans les dessins, figure 2C, le sélecteur 11 est sur la position C3 pour sélectionner la moitié des dispositifs de cuisson 4, à savoir ici trois plaques de cuisson répondant aux indentifications R1, R3 et R6. Avantageusement, cela correspondant à une alternance entre une plaque de cuisson 4A sur laquelle doit se déverser la pâte à crêpes, puis une plaque de cuisson 4A sur laquelle ne doit pas se déverser la pâte à crêpes, et ainsi de suite. On peut envisager de modifier l'invention pour un nombre impair de plaques.

Lorsque le sélecteur 11 est amené sur la position C1 cela correspond, par exemple, à la sélection d'un seul dispositif de cuisson 4, répondant, par exemple, à l'identification R1, sur tous les dispositifs de cuisson 4. Enfin, une autre position C6 permet de sélectionner tous les dispositifs de cuisson 4 au travers de leur identification R1 à R6.

De manière particulièrement étonnante, la demanderesse s'est aperçue qu'en alternant les dispositifs de cuisson 4 sélectionnés et les dispositifs de cuisson 4 non-sélectionnés, il s'en suit un gain significatif d'espace car ces commandes C3 et C1 permettent d'avoir des plaques de cuisson libres permettant de retourner la crêpe et de la garnir tout en cuisant la face inférieure, là où un simple ralentissement obligerait à utiliser des plaques consécutives.

Bien sûr, il est envisageable que les moyens de sélection 11 ne se présentent pas sous forme d'un seul, mais plusieurs sélecteurs sans sortir du cadre de l'invention.

Selon une variante, la machine 1 comprend un panneau de commande sur lequel sont prévus des commandes. Le panneau de commande est de préférence prévu sur le bâti 2 de la machine. Les commandes sont de préférence des boutons rotatifs. Par exemple le sélecteur desdits moyens de sélection 11 est prévu sur le panneau. En outre, une commande de purge 11a (P : « purge pâte ») est prévue pour actionner une purge de la pâte dans le système de distribution. En outre, une commande de lavage 11b (W. : « wash water ») est prévue pour actionner un lavage et/ou un rinçage. En outre, une commande de vitesse 11c (Sp. : « speed ») est prévue pour actionner deux vitesses de rotation du support rotatif 9. Un fonctionnement particulier des commandes 11a et 11b est détaillé plus bas.

De préférence, le panneau de commande est sensiblement vertical sur un flanc de la machine. Cela permet un gain d'espace. Le panneau comporte une face supérieure, sur laquelle sont identifiés des positions d'actionnement des commandes. Avantageusement, cet agencement permet un contrôle sans devoir s'abaisser au niveau du panneau de commande. En particulier des icones sont prévus pour identifier rapidement les positions de certains, par exemple un lièvre pour la position rapide, et une tortue pour la position lente.

De préférence, les dispositifs de cuisson 4 peuvent être disposés de manière amovible sur le support rotatif 9, plus particulièrement dans leur logement respectif 9B du plateau circulaire 9A.

Celui-ci peut être équipé d'une barre de protection en périphérique évitant à l'opérateur de se bruler inopinément au contact du plateau circulaire 9A et des dispositifs de cuisson 4.

Un couvercle de plaque 9C peut être prévu pour couvrir les dispositifs de cuisson 4 en laissant des plaques de cuisson 4a non couvertes. Ce couvercle de plaque 9C forme un plateau de travail, préférentiellement en inox, évitant que des salissures en termes d'ingrédients de crêpes sucrées ou salées ne tombent entre les dispositifs de cuisson 4.

De préférence, le système de distribution 6 est mobile entre une position d'activation dans laquelle il est au niveau du point de distribution 5, et une position d'inactivation dans laquelle il est à distance du point de distribution 5. Plus préférentiellement, le système de distribution 6 est pivotant autour d'un axe vertical entre la position d'activation et la position d'inactivation. Selon une variante, une commande d'activation automatique est prévue lorsque le système de distribution est dans la position d'activation, et la désactivation a lieu dans la position d'inactivation. Un système basé sur une connexion/déconnexion électrique en fonction desdites positions peut être envisagé.

Avantageusement, cet agencement permet de libérer de l'espace au niveau du point de distribution en position d'inactivation tout en stoppant la rotation et/ou la distribution de produit.

Selon une variante, l'unité de gestion 10 connectée au système de distribution 6 est en outre connectée à un circuit de lavage en particulier selon un agencement davantage détaillé plus bas. L'unité de gestion 10 est de préférence configurée pour déclencher automatiquement un lavage du dispositif de distribution 6 lorsque celui-ci est en position d'inactivation, par exemple après un certain délai pouvant être réglable. De préférence une signalisation du début du cycle de lavage est prévue par exemple avec trois bips sonores préalables.

Selon une variante davantage préférée, lorsque le système de distribution est à une position intermédiaire entre la position d'activation et la position d'inactivation, l'unité de gestion est configurée pour émettre une alerte, par exemple après un certain délai pouvant être réglable, jusqu'à ce que le système de distribution soit déplacé soit en position d'activation, soit en position d'inactivation. Le délai est par exemple de 1 minute. L'alerte est de préférence de un ou plusieurs bips sonores, mais on peut également envisager un autre type d'alerte sonore et/ou une alerte visuelle et/ou sensorielle. Cet agencement permet de limiter les congestions du dispositif de distribution.

Un autre objet de l'invention concerne une méthode particulière de préparation de crêpes. La méthode est de préférence réalisée au moyen d'une machine 1 telle que décrite dans la présente demande.

La méthode comprend, en particulier après avoir allumé la machine 1 et les dispositifs de cuisson 4 dans une étape (a), au moins une étape (b) à agir sur les moyens de sélections du ou des dispositifs de cuisson 4 rendus actifs et sur lesquels la pâte à crêpes doit être distribuée, et une étape (C) activer le cycle de fonctionnement de la machine.

De préférence, toutes les plaques de cuisson sont allumées pendant l'utilisation de la machine 1 quelle que soit la cadence sélectionnée, en particulier pendant toute une journée. Les plaques allumées en cadence basse permettent de chauffer les crêpes retournées pour être garnies.

La température de cuisson est de préférence supérieure à 200 degrés Celsius (°C), plus préférentiellement d'environ 250°C. Ces températures permettent une cuisson rapide de la pâte à crêpe et un crépitement de cuisson agréable.

L'invention porte en outre sur un automate de préparation de crêpes particulièrement adapté à l'invention. En particulier, l'automate fait partie de l'unité de gestion telle que décrite précédemment.

L'automate est configuré pour commander automatiquement les moyens d'entrainement 7 du support rotatif avec ses dispositifs de cuisson 4 et le système de distribution dudit produit, en en particulier en fonction du nombre de dispositifs de cuisson 4 sur lesquels le produit doit être distribué.

Selon un aspect intéressant, l'automate est réglable pour sélectionner une partie de dispositifs de cuisson sur lesquels un produit à cuire est distribué.

Une deuxième partie de l'invention concerne le système de distribution avec un système d'injection et d'étalage de pâte à cuire 1B, en particulier pour une machine de préparation de crêpes 1.

Un système d'injection permet d'éviter de disposer le réservoir de pâte au-dessus de la surface de cuisson, ce qui aboutit à un gain d'espace.

Le système 1B comprend un réservoir de pâte 13 ayant de préférence une sortie inférieure et un couvercle 14 supérieur pour son remplissage.

Le système 1B comprend en outre une pompe d'injection 15 connectée à la sortie inférieure du réservoir 13. L'actionnement de la pompe 15 permet de prélever de la pâte dans le réservoir 13 pour la distribuer sur un dispositif de cuisson 4. Une pompe d'injection 15 préférée sera davantage détaillée plus bas.

En particulier, le système 1B comprend un compartiment de réservoir et un compartiment d'injection de préférence juxtaposé et parallèle au compartiment de réservoir.

Le système d'injection et d'étalage 1B comprend en outre un étaleur 16 connecté à la pompe d'injection 15 et configuré pour étaler une pâte sur une plaque de cuisson 4a. En particulier, le système 1B est configuré pour distribuer de la pâte sur la plaque de cuisson 4a et étaler ladite pâte sur cette plaque, en particulier pour former une crêpe.

A cet effet, le système comprend en outre un circuit d'injection 17 reliant le réservoir 13 à l'étaleur 16. Le circuit d'injection 17 permet de véhiculer la pâte du réservoir 13 vers le dispositif de cuisson 4.

Avantageusement, l'étaleur 16 permet d'automatiser l'étalage de la pâte sur la plaque de cuisson 4a pour éviter que ce soit un utilisateur qui fasse cet étalage avec des aléas de fatigue pouvant aboutir à des épaisseurs de pâte variables et des cuissons de crêpe fluctuantes. L'étaleur 16 permet ainsi d'avoir un étalage uniforme au fil des cuissons, et de ce fait avoir une qualité constante de crêpes cuites.

Selon une variante, le système d'injection et d'étalage 1B comprend un système de réfrigération 18 du réservoir 13. En particulier, une structure de réfrigération 18A tel qu'un serpentin est disposée dans le réservoir 13 de pâte à crêpes. La structure de réfrigération 18A est par exemple disposée dans une double paroi du réservoir 13. Un dispositif de réfrigération 18B connecté à la structure de réfrigération 18A, peut être logé dans ou près le bâti 2. Par exemple, la température du réservoir est fixée à plus de 0 °C, de préférence entre 4 et 6 °C, plus préférentiellement environ 5 °C. Une température à 5 °C correspond à une satisfaction de la réglementation dans la conservation de la pâte à crêpe, ici pendant toute la durée d'utilisation.

De préférence, le système 1B comprend en outre au moins un moyen de prévention de congestions du circuit d'injection. Les moyens de prévention de congestions permettent de faciliter l'utilisation de la machine en limitant les bouchages du circuit d'injection par la pâte, par exemple, lorsqu'elle stagne et bouche les conduits ou bloque certaines pièces du circuit.

En outre, le circuit d'injection 17 associé à des moyens de prévention de congestions permettent d'avoir un appareillage efficace utilisable de manière prolongée sans avoir d'altération d'utilisation de la machine de préparation de crêpes 1 car l'utilisation peut être prolongée sans interruption.

De plus, le circuit d'injection 17 associé à la pompe 15 permettent d'avoir une distribution uniforme de pâte à crêpes.

De manière étonnante, la demanderesse s'est aperçue que la simple réfrigération de la pâte à crêpes pendant toute l'utilisation de la machine, permettait de limiter l'obstruction d'un circuit d'injection 17 amélioré comprenant en particulier des pièces d'entraînement internes au circuit. Il semblerait qu'à température ambiante, les composants de la pâte interagissent pour créer des amants, probablement d'amidon absorbant du lait et des oeufs, qui bloquent certaines pièces ou bouchent le circuit d'injection. L'invention permet d'y remédier.

Selon une variante, un des moyens de prévention de congestions du circuit d'injection comprend un moyen de malaxage 19 du contenu du réservoir 13. En particulier, une structure longitudinale 19A terminée par un élément de malaxage 19B, tel qu'un batteur, une hélice ou de préférence une soucoupe de malaxage, est prévue plongeante dans le réservoir 13. Avantageusement, les éléments de la pâte à crêpes susceptibles de sédimenter tels que le beurre et les autres matières grasses ou amas, sont continuellement mélangés dans la pâte à crêpes de sorte à éviter une obstruction du circuit d'injection 17. Plus préférentiellement, une soucoupe de malaxage est disposée sensiblement au niveau de la sortie du réservoir pour limiter davantage les obstructions de la pâte. La soucoupe présente au moins une rainure radiale.

Le système comprend de préférence le couvercle de réservoir 14 sur lequel est monté d'une part un moyen d'entrainement de ce moyen de malaxage, en particulier un moteur de malaxage 20, vers l'extérieur du réservoir 13, et d'autre part les éléments de malaxage 19B, vers l'intérieur du réservoir 13. Plus particulièrement, l'élément de malaxage 19B fixé au couvercle 14, peut être au moins partiellement retiré du réservoir 13 en enlevant le couvercle 14 pour des manipulations de remplissage rapide sans encombrement de réservoir 13 par l'élément de malaxage 19B.

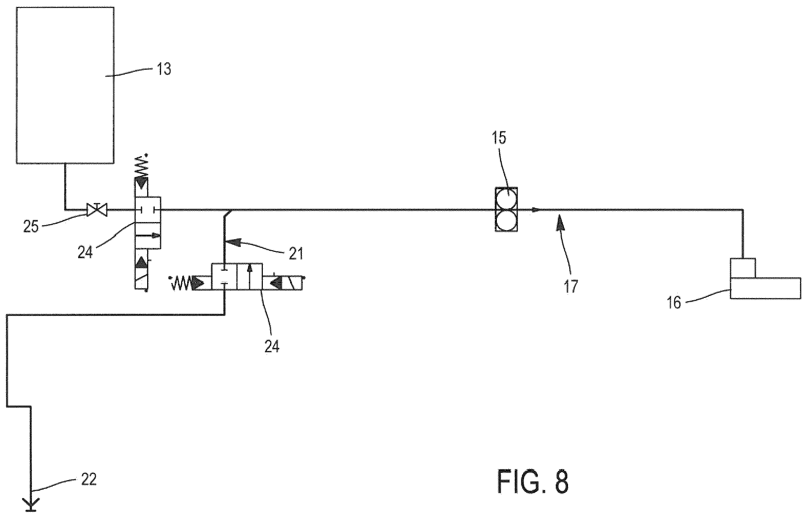

Selon une variante, un des moyens de prévention de congestions du circuit d'injection 17 comprend un circuit de lavage 21 du circuit d'injection 17, monté en particulier en parallèle d'une partie du circuit d'injection 17. Plus particulièrement, le circuit de lavage 21 débouche de préférence en un point sur le circuit d'injection 17 de sorte à permettre le lavage du circuit d'injection 17 entre le point le plus en amont et l'extrémité en aval du circuit d'injection, à savoir vers l'étaleur 16. Le circuit de lavage 21 permet d'effectuer un lavage et de préférence une purge du circuit d'injection 17. Ainsi, les résidus de pâte susceptibles d'obstruer les conduits sont évacués du circuit d'injection 17. Le circuit de lavage 21 comprend de préférence une arrivée d'eau 22. On peut en outre prévoir une pompe de lavage, un réservoir d'eau et/ou une source de produit de nettoyage mais ces variantes sont moins préférées. Des électrovannes 24 peuvent être prévues et connectées à un automate pour optimiser le lavage et/ou la purge du circuit d'injection 17. Des valves 25 peuvent être prévues pour éviter le reflux. Un montage particulièrement préféré est illustré en figure 8.

La valve 25 et les électrovannes 24 peuvent servir à l'application des commandes de purge 11a (P. P : « purge pâte ») et de lavage 11b (W.W. : « wash water ») . Par exemple pour la purge de pâte, l'électrovanne 24 en regard de la valve 25 est fermée et la pompe 15 est actionnée pour évacuer la pâte résiduelle dans le circuit d'injection 17. Pour le lavage, l'électrovalve 24 du circuit de lavage est en outre ouverte pour démarrer un lavage du circuit d'injection 17.

Entre deux utilisations du système, par exemple, en fin de journée, un produit de nettoyage peut être versé dans le réservoir 13 et parcours le circuit d'injection. Après un certain temps le système peut être rincé par un cycle « purge pâte » puis un cycle de lavage.

Selon une variante, un des moyens de prévention de congestions du circuit d'injection comprend un prémix particulier de pâte à crêpes. Les composants de la pâte à crêpes peuvent être optimisés pour éviter le bouchage du circuit d'injection tout en ayant une bonne qualité de crêpes de manière constante.

Les prémix de pâte à crêpes déshydratés à mélanger avec de l'eau peuvent avoir une bonne fluidité mais le gout n'est généralement pas satisfaisant. Les pâtes à crêpes préparées intégralement avant utilisation ou stockées n'ont malheureusement pas une tenue dans le temps satisfaisante. De manière particulièrement étonnante, la demanderesse s'est aperçue qu'un prémix comprenant des ingrédients de pâte à crêpes à l'exception du lait, déshydraté associé à du lait permettait de reconstituer une pâte à crêpes avec une bonne fluidité et un gout amélioré par rapport aux prémix classiques, tout en ayant une bonne tenue dans le temps. Il semble que la déshydratation de certains composants du lait et leur réhydratation nuisent grandement à la qualité de la pâte reconstituée. L'invention permet de remédier à ces désavantages.

Plus particulièrement, le prémix de pâte à crêpe ne comprend pas de beurre. Avantageusement, cette composition limite significativement le nombre de bouchages du circuit d'injection même en cas de stagnations. En outre, la pâte à crêpe est plus digeste et ne provoque pas de salissures rousses sur les crêpes.

Un exemple de composition de prémix comprend une partie solide sèche et une partie liquide. La partie solide peut comprendre de la farine, des oeufs entiers en poudre et de préférence du sel. La partie liquide comprend du lait ou un lait reconstitué. Un lait reconstitué permet de contrôler les ingrédients alors que du lait peut avoir des compositions variables même chez le même fournisseur.

Selon une variante, la pompe 15 a une configuration particulière. Elle est formée par un logement 26 connecté au circuit d'injection 17. Le logement 26 de la pompe 15 reçoit la pâte issue du circuit d'injection 17. En outre, le logement 26 de la pompe 15 comprend au moins une structure de pompage 27 entrainée en mouvement dans le logement 26. De préférence, les structures de pompage sont deux roues à lobes configurées pour être entrainées en rotation dans le logement 26 de la pompe 15. L'axe de rotation est de préférence vertical. Les mouvements de ladite structure de pompage 27 dans le logement 26 permettent d'affiner le dosage de pâte. En particulier, la quantité de pâte déplacée par les structures de pompage 27, par exemple entre les lobes 27A, est optimisée pour correspondre à une dose correspondant à un nombre de tour des structures de pompage 27. Plus particulièrement, ladite structure de pompage 27 est entrainée en rotation, par exemple, au moyen d'un moteur de pompage 28. La vitesse de rotation peut permettre d'affiner la dose de pâte injectée.

Le logement 26 de la pompe 15 est de préférence un logement prismatique à base plane, plus préférentiellement horizontale. En particulier, la base est sensiblement ovale, ellipsoïde ou de préférence oblongue. Les roues à lobes sont de préférence entrainées en regard des parties circulaire du logement 26.

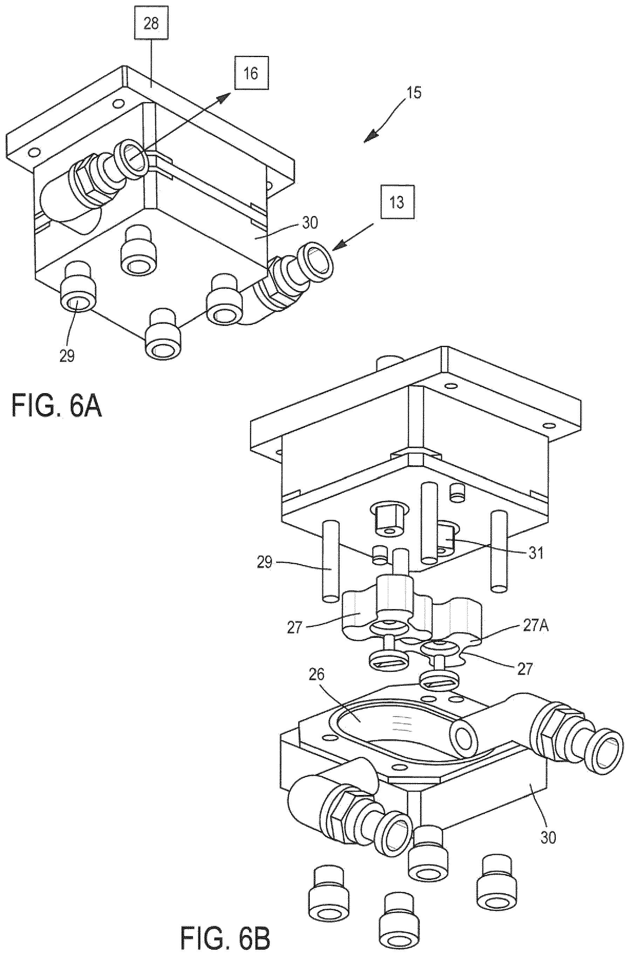

Comme illustré en figures 6A et 6B, la pompe 15 a de préférence une structure générale cubique ou parallélépipédique pour optimiser les espaces d'agencement du système d'injection 1B. En particulier, la pompe 15 est formée par un assemblage de plaques avec des moyens de fixation traversants 29 tels qu'un système de boulonnage, par exemple avec quatre structures de fixation. Au moins une plaque de pompe 30 comprend le logement 26 comprenant ladite structure de pompage 27. Au moins un élément d'entrainement 31, ici supérieur, est solidarisé à ladite structure de pompage 27 pour former une connexion à un moyen d'entrainement tel que ledit moteur de pompage 28.

Selon une variante, l' étaleur 16 a également une configuration particulière. En particulier, l'étaleur 16 est configuré pour être entrainé en rotation de sorte à former automatiquement une crêpe sur la surface de cuisson 4a. L'axe de rotation est perpendiculaire à la surface de cuisson, à savoir en particulier vertical. De préférence, l'étaleur 16 et son axe, en particulier le compartiment d'injection, peuvent être déplacés entre le point de distribution 5 et une position à distance du point de distribution 5. En particulier, le compartiment d'injection est pivotant autour d'un axe vertical et l'étaleur 16 reste de préférence à une hauteur correspondant à une distance de 1 cm au-dessus de la surface de cuisson sans translations verticales. L'étaleur peut ainsi « lécher » la surface de cuisson.

L'entrainement en rotation de l'étaleur 16 est réalisé grâce à un moyen d'entrainement qui est ici un moteur d'étalage 16a détaillé plus bas. L'étaleur 16 est en particulier configuré pour être entrainé en rotation à une vitesse de moins d'1,5 tours par seconde, plus préférentiellement moins d'1 tour par seconde. Ces vitesses permettent d'avoir une distribution rapide de la pâte à crêpe et une cadence accélérée.

De préférence, l'étaleur 16 comprend au moins une plaque d'étalage 32 munie d'un réservoir d'étalage 33 débouchant sur une surface d'étalage 34. De préférence, le réservoir d'étalage 33 est creusé dans la plaque d'étalage 32. La surface d'étalage 34 peut être prévue d'un côté de la plaque 32 et l'étaleur 16 est alors configuré pour être entrainé en rotation du dit côté. Le réservoir d'étalage 33 est également un moyen de calibrer la quantité de pâte et uniformiser les épaisseurs de crêpes cuites. Un réservoir d'étalage 33 ouvert permet de déverser directement la quantité contenue sur la surface de cuisson 4a. La forme de plaque d'étalage 32 couplée au réservoir d'étalage 33 permet d'avoir un étalage régulier le long d'un bord inférieur de la plaque d'étalage 32. Le mouvement de rotation permet un étalage autour de l'axe de rotation, limitant ainsi des pertes de pâtes qu'il y aurait avec un mouvement de translation horizontale de la plaque d'étalage le long de la surface de cuisson.

On peut envisager un étaleur 16 avec un réservoir d'étalage 33 réglable, par exemple avec une pièce pouvant être en silicone mobile dans le réservoir d'étalage 33 ou un ou plusieurs inserts pouvant être en silicone et à positionner dans le réservoir d'étalage 33.

Selon une variante, le réservoir d'étalage 33 est formé par une rainure longitudinale débouchant sur la surface d'étalage par au moins un, de préférence plusieurs orifices d'étalage 35a, 35b, 35c, plus préférentiellement de tailles variables. En particulier, les orifices d'étalage 35 sont de taille croissante de l'axe de rotation de la plaque d'étalage 32 vers l'extrémité opposée audit axe de rotation. En outre, l'arrivée de pâte 36 vers le réservoir d'étalage 33 est sensiblement proche, en particulier au niveau, dudit axe de rotation. Une taille variable permet d'équilibrer la distribution de pâte en dessous du réservoir d'étalage 33 car l'arrivée de pâte 36 permet de remplir le réservoir d'étalage jusqu'à l'orifice suivant 35b plus rapidement que la pâte se déverse par l'orifice précédent 35a. Ainsi, le réservoir d'étalage 33 se remplit de manière centrifuge, puis s'écoule de manière centripète sans autre système mécanique à cet effet. En parallèle, l'étaleur 16 étale la pâte déversée sur la surface de cuisson 4a au fur et à mesure qu'elle y est déversée ce qui produit un résultat significativement amélioré en comparaison aux moyens d'étalage de l'art antérieur, sans utiliser de système mécanique et électronique complexe.

De préférence, une structure en forme d'arche 37 est prévue en dessous d'au moins un, de préférence de chaque, orifice 35a-35c. Les structures en forme d'arche 37 permettent de répartir uniformément la pâte sous le réservoir en autant d'amas.

En particulier, l'étaleur 16 comprend deux plaques d'étalage dont une deuxième plaque 38 fixée de manière réversible à la première 32 pour former le réservoir d'étalage 33. Avantageusement, cet agencement permet un lavage facilité en désassemblant les deux plaques 32, 38. On peut envisager un réservoir d'étalage également creusé dans la deuxième plaque d'étalage 38.

De préférence, au moins une plaque, en particulier la deuxième plaque 38 comprend des aspérités 38a sur son bord inférieur. Avantageusement, les aspérités permettent de mieux répartir la pâte sur la surface de cuisson. Plus préférentiellement, la partie inférieure proche de la surface de cuisson comprend un renfoncement longitudinal 38b surplombé par lesdites aspérités qui sont ici espacées.

Selon une variante, une pièce particulière est prévue pour faire la jonction entre la pompe d'injection 15 et le moyen d'entrainement qui est ici un moteur d'étalage 16a. Il s'agit d'un mécanisme de connexion 39 configuré pour à la fois véhiculer la pâte vers le réservoir d'étalage 33 et entrainer l'étaleur 16 en rotation. En particulier, un conduit est prévu dans le mécanisme 39, ainsi qu'une connexion rotative. Plus particulièrement, le mécanisme de connexion 39 comprend une pluralité de pièces de révolution emboîtées ensemble associées à au moins un joint 40, ainsi qu'au moins une butée 41 d'entrainement en rotation. Le mécanisme de connexion 39 peut avoir une taille inférieure à 5 cm.

Le mécanisme de connexion 39 comprend une pièce externe 42, ici, cylindrique, comprenant une embouchure 43 d'entrée connectée au circuit d'injection 17, et une pièce interne 44 configurée pour être logée dans la pièce externe 42 en délimitant un espace au moins partiellement annulaire autour de la pièce interne 44. La pièce interne 44 présente de préférence une partie axiale 44a s' étendant le long d'un axe commun aux pièces externe 42 et interne 44. La pièce interne 44 peut présenter un rebord circulaire 45 sur lequel repose la pièce externe 42.

Une embouchure de sortie 46 est prévue sur le mécanisme de connexion pour le passage de la pâte vers ladite plaque de cuisson. En particulier, la pièce interne 44 comprend ladite embouchure de sortie 46 de préférence sur sa partie axiale jusqu'à une partie inférieure de la pièce interne 44. Il s'agit ici d'un conduit de 8 mm de diamètre. L'embouchure de sortie 46 débouche sur l'arrivée de pâte 36 de l'étaleur 16.

La pièce interne 44 a de préférence une forme d'haltères avec des protubérances circulaires 44b de part et d'autre de la partie axiale 44a. La protubérance circulaire 44b supérieure sert de préférence de support à une pièce d'entraînement 47 connectée à un moyen d'entrainement tel que ledit moteur d'étalage 16a. La pièce d'entrainement 47 a de préférence une forme d'haltère. La connexion entre la pièce d'entrainement 47 et la pièce interne 44 se fait par un bras 48 formé par exemple par une vis traversant les deux pièces 44, 47, associé à une buttée d'entrainement formée ici par un taquet 49. De préférence le taquet 49 est formé ou fixé, par exemple vissé, sur la pièce interne 44, et la pièce d'entrainement 47 comprend un logement dudit taquet. Un agencement inverse ou deux logements peuvent être envisagés. La pièce interne 44 est de préférence solidarisée à ladite plaque d'étalage 32 plus préférentiellement par l'intermédiaire du rebord circulaire 45, par exemple au moyen de deux vis 50.

## Revendications

1. Machine de préparation de crêpe ou similaire comportant un bâti 2 sur lequel est monté en pivotant autour d'un axe vertical un support rotatif 9 équipé sur son pourtour d'une pluralité de dispositifs de cuisson 4, la machine 1 comprenant encore des moyens d'entrainement 7 en rotation dudit support 9 pour amener successivement et cycliquement lesdits dispositifs de cuisson 4 au moins au-devant d'un système de distribution 6 de pâte à crêpe ou similaire et une unité de gestion 10 du fonctionnement desdits moyens d'entrainement 7 et dudit système de distribution 6, **caractérisé en ce que** sur le support rotatif 9 sont montés des moyens d'identification de position angulaire R1, R2, R3, R4, R5, R6 de chaque dispositif de cuisson 4 sur ce support rotatif 9 et que sur le bâti 2 sont montés des moyens de lecture aptes à transmettre à l'unité de gestion 10 une information relative au positionnement d'un dispositif de cuisson 4 au passage des moyens d'identification R1 ; R2 ; R3 ; R4 ; R5 ; R6 de ce dernier au-devant desdits moyens de lecture, la machine 1 comportant encore, en liaison avec l'unité de gestion 10, des moyens de sélection 11 pour sélectionner entre au moins un dispositif de cuisson 4 et au moins plusieurs dispositifs de cuisson 4, pour commander l'arrêt en rotation immédiat ou temporisé dudit support rotatif 9 au passage des moyens d'identification R1 et/ou R2 et/ou R3 et/ou R4 et/ou R5 et/ou R6 du ou des dispositifs 4 sélectionnés devant lesdits moyens de lecture.

2. Machine selon la revendication précédente, **caractérisé en ce que** le support rotatif 9 comprend un plateau circulaire 9A comportant des logements 9B pour la réception, notamment de manière amovible, des dispositifs de cuisson 4.

3. Machine selon la revendication précédente, **caractérisé en ce que** les logements 9B pour la réception des dispositifs de cuisson 4 sont ménagés à décalage angulaire régulier au niveau du plateau circulaire 9A.

4. Machine selon l'une quelconque des revendications précédentes, **caractérisé en ce que** les moyens d'identification R1, R2, R3, R4, R5, R6 équipant le support rotatif 9 sont définis par des éléments à réponse optique et/ou magnétique et/ou mécanique.

5. Machine selon l'une quelconque des revendications précédentes, **caractérisé en ce que** les moyens de lecture sur le bâti 2 sont de type optique et/ou magnétique et/ou mécanique.

6. Machine selon l'une quelconque des revendications précédentes, **caractérisé en ce que** les moyens de sélection 11 se présentent pas sous forme d'au moins un sélecteur à au moins deux positions C1, C3, C6, chaque position correspondant à la sélection d'un nombre distinct et supérieur ou égale à 1 de dispositifs de cuisson 4, ceci au travers des moyens d'identification R1, R2, R3, R4, R5, R6 de chacun de ces dispositifs de cuisson 4.

7. Machine selon l'une quelconque des revendications 1 à 5, **caractérisé en ce que** les moyens de sélection 11 se présentent pas sous forme d'un sélecteur associé, au travers des moyens d'identification R1, R2, R3, R4, R5, R6, à chaque dispositif de cuisson 4 et/ou à des groupes distincts R1 ; R1, R3, R6 ; R1, R2, R3, R4, R5, R6 de dispositif de cuisson 4, chaque groupe comportant au moins un dispositif de cuisson 4.

8. Machine selon la revendication 6, **caractérisé en ce que** lesdits moyens de lecture comportent plusieurs unités de lecture, et à chacune des positions du sélecteur C1, C3, C6 des moyens de sélections 11 correspond à l'activation d'une unité de lecture déterminée apte à reconnaitre l'identification R1 et/ou R2 et/ou R3 et/ou R4 et/ou R5 et/ou R6 du ou des dispositifs de cuisson 4 correspondant à une sélection déterminée.

9. Machine selon la revendication 2 et la revendication précédente, **caractérisé en ce que** lesdits moyens de lecture peuvent se présenter sous forme de plusieurs capteurs magnétiques et/ou optiques et/ou mécaniques placés sur le bâti 2 sous le support rotatif 9 à différentes distances de l'axe de rotation de ce dernier, les moyens d'identifications R1, R2, R3, R4, R5, R6 se présentant sous forme, selon le cas, d'un élément à réponse magnétique et/ou optique et/ou mécanique placé sous le support rotatif 9 et solidaire de ce dernier, au droit d'un dispositif de cuisson 4, ceci à une distance de l'axe de rotation du support 9 correspondant à au moins un desdits capteurs.

10. Machine selon l'une quelconque des revendications précédentes, **caractérisé en ce que** l'unité de gestion 10 comporte des moyens de commande d'ajustement de la vitesse de rotation du support rotatif 9 en fonction du nombre de dispositifs de cuisson 4 sélectionné et/ou du temps de cycle de distribution de pâte au-devant du système de distribution 6.

11. Machine selon l'une quelconque des revendications précédentes, **caractérisé en ce que** les dispositifs de cuisson 4 sont disposés de manière amovible sur le support rotatif 9.

12. Machine selon l'une quelconque des revendications 2 à 11, **caractérisé en ce que** le plateau circulaire 9A est équipé d'une barre de protection en périphérique 12.

13. Machine selon l'une quelconque des revendications précédentes, **caractérisé en ce qu'**elle comporte un couvercle de plaque 9C couvrant en partie les dispositifs de cuisson 4 en formant un plateau de travail.

14. Machine selon l'une quelconque des revendications précédentes, **caractérisé en ce que** qu'elle comprend un système d'injection et d'étalage de pâte à cuire comprenant
- un réservoir (13) de pâte ayant une sortie,
- une pompe d'injection (15) connectée à la sortie du réservoir (13),
- un étaleur (16) connecté à la pompe d'injection et configuré pour étaler une pâte sur une plaque de cuisson d'un dispositif de cuisson (4), et
- un circuit d'injection reliant le réservoir à l'étaleur (16).
